# EUROPEAN PATENT APPLICATION

(11) **EP 4 382 470 A1**
(43) Date of publication of application: **12.06.2024**
(21) Application number: 23386129.3
(22) Date of filing: 01.12.2023
(51) Int. Cl.: B66B 19/00

(54) **ALIGNMENT SYSTEM FOR INSTALLING AN ELEVATOR**

(30) Priority: 05.12.2022 GR 20220101005
(71) Applicant: Kleemann Hellas S.A., 61100 Kilkis (GR)
(72) Inventor: Georgiadis, Georgios, 55134 Agios Ioannis Kalamarias (GR)

(57) **Abstract**

The present invention relates to an alignment system for installing an elevator, where a cord (1) is left from the elevator roof to come to rest. At the end of the cord (1) there is a threaded weight (2), with a source for the emission of a laser beam (3), which indicates the exact position of fixation (4) of the base (5) at the bottom of the installation. The base (5) is screwed with fixing screws (7) to the bottom. The weight (2) is screwed into the recess (6) of the base (5) and fixed. Each floor door (8) has semi-circular fittings (9) through which the cord (1) passes to ensure the alignment of the doors (8).

## Description

The present invention relates to an alignment system used during the installation of an elevator system and serving mainly to align sub-systems, such as guides and car doors.

When installing an elevator, vertical and weighted positioning of the car doors, as well as the guides on which either the car or the counterweight frame move, is required. The procedure for its correct placement requires the use of an alignment system. In its most common form such a system consists of lines, which are cords or thin wires, and a weight tied to the lower end of the line. Initially, bases are placed in the upper part of the shaft and on the side where the guides will be placed, the procedure for aligning the doors of the floors being similar. Holes are drilled with a drill and the bases are stabilized with one or two plugs and then the lines are tied to the bases. The bases are adjustable and can be moved in two directions, so that the exact point of the lines can be achieved. Then the line bases are placed on the bottom, as on the upper part, and after coming to rest, the lines are tied to the special movable sockets located on the bases. This work requires great care in order to set the lines correctly and ensure the subsequent alignment of the guides and doors. Especially in the case of large shafts in tall buildings, this work should be done with even greater care, since even a small deviation of the order of a few degrees is transferred throughout the shaft ending up with large deviations.

The main disadvantage of this process is how the cords are fixed to the bottom. That is, the fact that after coming to rest the lines should be tied on a stable base, therefore the installer will have to tie the cord on the base with his hands which can destroy the alignment.

It is thus an object of the invention to effectively address the problems and shortcomings of the prior art by proposing an alignment system for elevator installation. The system in question has a precise targeting capability, by using a laser, while at the same time ensuring that the aiming point is captured and corresponds to the actual fastening point of the tip of the cord. A further advantage of the system is that it has specific components that ensure the alignment of floor doors, without the need for specific measurements and calculations per floor.

### BRIEF DESCRIPTION OF THE DRAWINGS

Figure 1 shows an elevator shaft with the device of the invention for aligning floor doors.
Figure 2 shows the placement and fastening of the base of the invention for the implementation of the invention.
Figure 3 shows the weight being screwed to the base of the invention.
Figures 4 and 5 show in detail the fastening of the base to the bottom of the shaft and the screwing of the weight to the base.
Figure 6 shows misalignment of a floor door of an elevator, where the cord comes into contact with the semicircular fittings.
Figure 7 shows correspondingly the correct alignment of a floor door, where the cord passes seamlessly through the semicircular fittings.
Figure 8 is a plan view of the semi-circular alignment components and the cords passing through them.

### DETAILED DESCRIPTION OF AN EMBODIMENT OF THE INVENTION

The invention will subsequently become apparent to those skilled in the art, with reference to the accompanying drawings, in which it is illustrated in a nonlimiting manner.

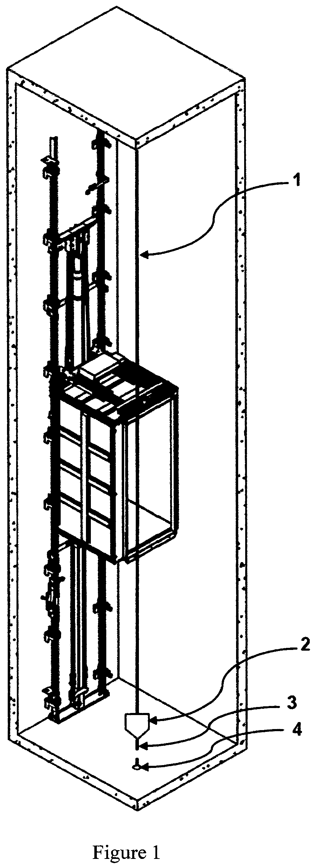

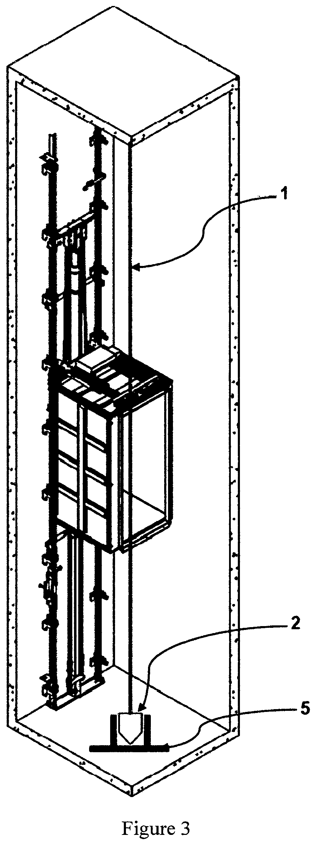

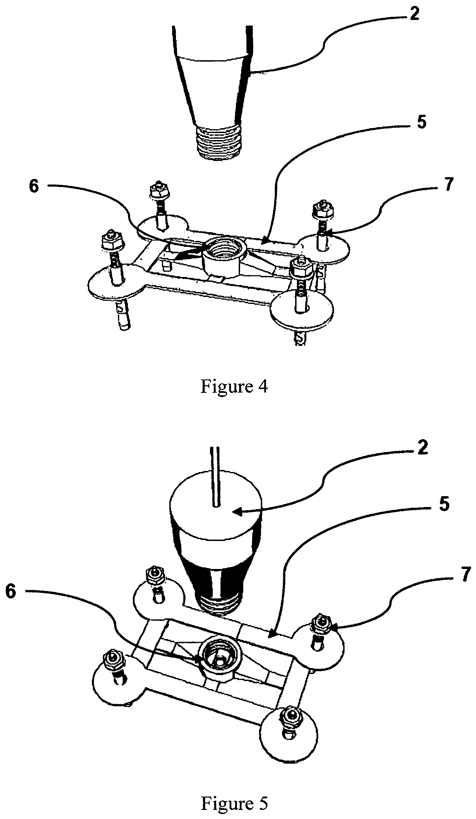

The present invention consists of a cord (1), which is fixed to the ceiling of an elevator shaft, even in the conventional manner of a hook. The point of attachment of the cord to the elevator roof depends on whether it concerns the alignment of the doors or the alignment of the elevator guides. Therefore, after the relevant measurement, either a hook is nailed to the roof of the shaft, or some relevant adapter is placed that does not require drilling into structural elements of the shaft. Further there is a special threaded weight (2), which comprises a laser source, from which a laser beam (3) is emitted, indicating the fixing point (4) on the bottom, while it also includes the fixing base (5). The cord (1) with the special weight (2) tied to its end is released until it comes to rest, as shown in Figs. 1, 2 and 3. The laser beam (3) indicates the exact fixation point (4) on the bottom, where the base (5) is fixed. On the base (5), as shown in Figs. 4 and 5, there is a screw recess (6), in which the weight (2) is placed, the latter having a thread of a suitable diameter at its end to screw into the recess (6) of the base (5). The base (5) is fixed to the bottom with fixing screws (7).

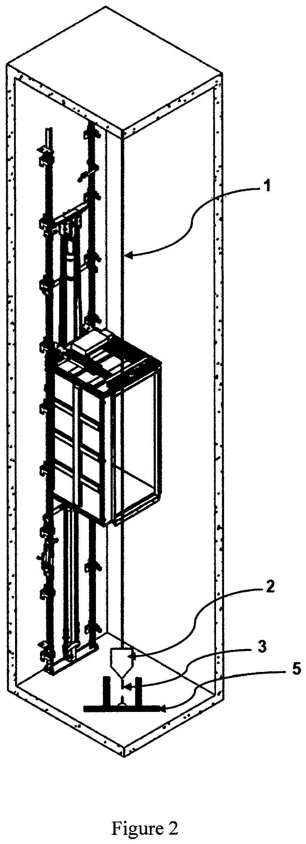

In more detail, Fig. 1 shows the device of the invention in an indicative implementation and specifically in the case where the embodiment concerns the alignment of floor doors. The cord (1) with the special weight (2) at its end is left free inside the shaft. It is left free until it comes to rest so that the laser is pointing steadily at a fixation point (4) at the bottom of the well. Then the base (5) is placed on the bottom, Fig. 2, so that the centering point of the base (5) coincides with the laser indication on the fixing point (4) and is embedded. Further during the final stage, the special weight (2) is now screwed and fixed in the recess (6) of the base (5) which is embedded on the bottom of the well. The weight (2) is screwed so as to achieve the required tension of the cord (1), so that it now acts as a string that will be able to return to the vertical balance position automatically after any interference.

Figures 4 and 5 further disclose the invention since the size of the previous figures made it impossible to depict in detail the mounting base (5). These Figures show in detail the mounting base (5), in the recess (6) of which the special weight (2) is screwed, as well as the screws (7) with which the base (5) is fixed to the bottom.

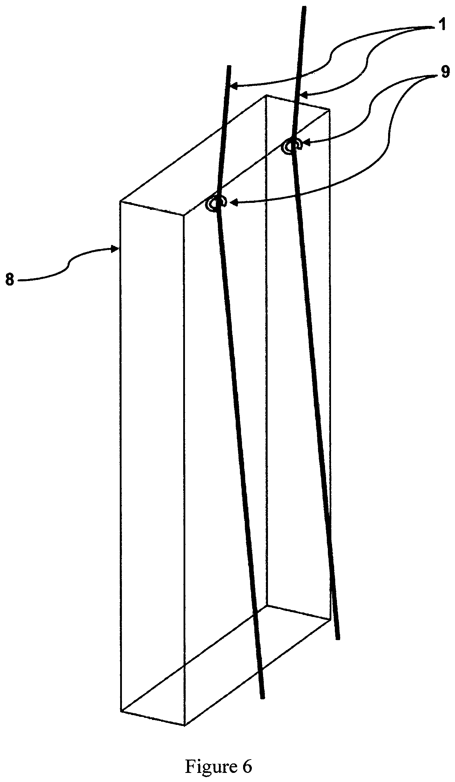

Below, the mode of operation of the invention and its application process for aligning floor doors (8) is described in detail. Fig. 5 and 6 show the process in more detail. For this application, at least two systems of the described invention are required, so that the alignment of each door on all axes is secured. Also, each door (8) has two semicircular components (9), also known as C-rings. The cords (1) must pass through the interior of the semi-circular fittings (9), without touching anywhere on their inner circumference and distorting the alignment.

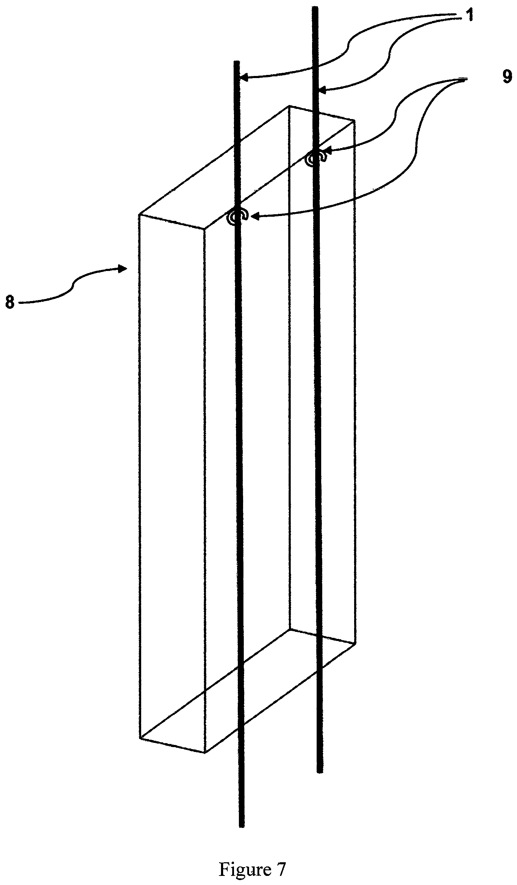

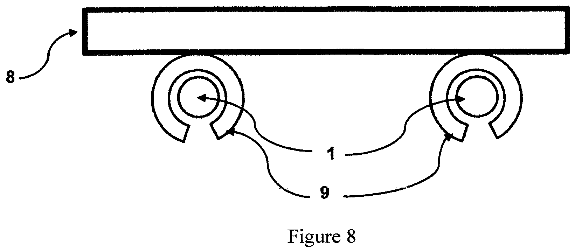

Fig. 6 represents the case where the door is installed incorrectly and the cord (1) is deformed, as it comes internally into contact with the semi-circular components (9). On the contrary, Fig. 7 shows the correct placement of the door. Due to construction, the cord (1) is fully stretched and acts as a string, so if it is deformed, due to coming into contact with the inside of the semi-circular part (9), for example due to misalignment of the door, when it is removed, it returns to its original vertical equilibrium position along which it is fully aligned. Fig. 8 shows in plan view and in detail how the cords (1) pass through the interior of the semi-circular components (9) without practically touching them. In the event that the cord (1) touches a point on the inner circumference of the semi-circular components (9), the installer adjusts the floor door accordingly, so that the cord (1) no longer comes into contact with the semi-circular component and only then he can be sure that the doors are correctly aligned, their final installation taking place at this position.

## Claims

1. An alignment system for installing an elevator, consisting of a cord (1), which is fixed to the ceiling of the installation, from which a threaded weight (2) hangs, with a source for emitting a laser beam (3) at the lower end of the cord (1 ), a mounting base (5) with a recess (6), a thread corresponding to the weight (2) and mounting screws (7) and semicircular components (9) on the doors of the floors (8) of the facility, **characterized in that** the mounting base (5) is screwed with the fixing screws (7) to the bottom of the installation, at a fixing point (4) indicated by the laser beam (3) and the weight (2) is screwed to the mounting base (5).

2. An alignment system for installing an elevator according to claim 1, **characterized in that** the cord (1) passes through the semicircular fittings (9) of the doors (8) of the floors of the installation without touching their inner circumference.
